# EUROPEAN PATENT APPLICATION

(11) **EP 4 759 219 A1**
(43) Date of publication of application: **17.06.2026**
(21) Application number: 24853613.8
(22) Date of filing: 06.08.2024
(51) Int. Cl.: A47L 11/40

(54) **OBSTACLE AVOIDANCE CONTROL METHOD AND APPARATUS FOR AUTOMATIC CLEANING DEVICE, AND STORAGE MEDIUM AND DEVICE**

(30) Priority: 11.08.2023 CN 202311016505
(71) Applicant: Beijing Roborock Innovation Technology Co., Ltd., Beijing 102206 (CN)
(72) Inventor: XING, Yuhan, Beijing 102206 (CN); WANG, Lei, Beijing 102206 (CN)
(74) Representative: Cabinet Beau de Loménie
(86) International application number: PCT/CN2024/110098
(87) International publication number: WO 2025/036202

(57) **Abstract**

Provided are an obstacle avoidance control method and apparatus for an automatic cleaning device, and a storage medium and a device. The method comprises: acquiring operating data of at least one cleaning assembly that is collected during an operating process of an automatic cleaning device (101); on the basis of the operating data of the cleaning assembly, determining a current operating face material corresponding to the current position of the automatic cleaning device (102); and according to an obstacle avoidance strategy corresponding to the current operating face material, performing obstacle avoidance control on the automatic cleaning device (103). In an operating process of the automatic cleaning device, the operating data of the cleaning assembly is utilized to identify the current operating face material corresponding to the automatic cleaning device, so as to realize adaptive obstacle avoidance strategy selection for different operating face materials, thereby reducing the phenomena of misidentification and missing identification of obstacles by the automatic cleaning device, and helping to improve the cleaning efficiency and the cleaning quality of the automatic cleaning device.

## Description

The present disclosure claims priority to Chinese Patent Application No. 202311016505.2, filed with the China National Intellectual Property Administration on August 11, 2023 and entitled "OBSTACLE AVOIDANCE CONTROL METHOD AND APPARATUS FOR AUTOMATIC CLEANING DEVICE, STORAGE MEDIUM, AND DEVICE", which is incorporated herein by reference in its entirety.

### TECHNICAL FIELD

The present disclosure relates to the technical field of sweepers, and in particular, to an obstacle avoidance control method and apparatus for an automatic cleaning device, a storage medium, and a device.

### BACKGROUND ART

With the continuous improvement of people's living standards, sweeping robots have increasingly become an important tool for household cleaning. Existing sweeping robots usually detect the operating surface by using sensors such as lasers or infrared rays to determine whether obstacle avoidance is required. However, relying solely on such sensors can sometimes lead to malfunctions or misjudgments, causing the sweeping robot to collide with obstacles or fail to clean thoroughly during operation.

### SUMMARY OF THE INVENTION

In view of this, the present disclosure provides an obstacle avoidance control method and apparatus for an automatic cleaning device, a storage medium, and a device, which can adaptively select obstacle avoidance strategies for different operating surface materials, and reduce the occurrence of misidentification and missed identification of obstacles by the automatic cleaning device, thereby helping to improve the cleaning efficiency and cleaning quality of the automatic cleaning device.

According to one aspect of the present disclosure, an obstacle avoidance control method for an automatic cleaning device is provided. The method includes:
acquiring operating data of at least one cleaning assembly collected during operation of the automatic cleaning device;
determining a current operating surface material corresponding to a current position of the automatic cleaning device based on the operating data of the cleaning assembly; and
performing obstacle avoidance control on the automatic cleaning device according to an obstacle avoidance strategy corresponding to the current operating surface material.

Optionally, the operating data of the cleaning assembly includes driving current data of the cleaning assembly; and determining the current operating surface material corresponding to the current position of the automatic cleaning device based on the operating data of the cleaning assembly includes:
in preset current ranges respectively corresponding to different operating surface materials, determining a preset current range within which the driving current data of the cleaning assembly falls as a hit current range, and determining the current operating surface material based on an operating surface material corresponding to the hit current range.

Optionally, the operating surface material includes: a first fabric material and a second fabric material, where a first height value of fabric fibers protruding from the operating surface in the first fabric material is greater than a second height value of fabric fibers protruding from the operating surface in the second fabric material.

Optionally, the obstacle avoidance strategy includes an obstacle avoidance reference parameter type, the obstacle avoidance reference parameter type of the first fabric material does not include a preset sensor data type, the obstacle avoidance reference data type of the second fabric material includes the preset sensor data type, and a sensing range of a preset sensor includes a range above the second height value.

Optionally, determining the current operating surface material based on the operating surface material corresponding to the located range includes:
determining, by counting, a target range with a highest number of occurrences in a first number of consecutively identified hit current ranges; and
determining the current operating surface material based on an operating surface material corresponding to the target range.

Optionally, determining the current operating surface material based on the operating surface material corresponding to the hit current range includes:
determining a currently identified material corresponding to the current position based on the operating surface material corresponding to the hit current range, and determining a historical operating surface material corresponding to the current position based on historical cleaning data of the automatic cleaning device;
determining the currently identified material as the current operating surface material if the historical operating surface material is consistent with the current operating surface material; and
acquiring material identification strategy setting data of the automatic cleaning device if the historical operating surface material is inconsistent with the current operating surface material, and determining the current operating surface material according to the material identification strategy setting data, the currently identified material, and the historical operating surface material.

Optionally, the operating data of the cleaning assembly includes driving current data of the cleaning assembly; and determining the current operating surface material corresponding to the current position of the automatic cleaning device based on the operating data of the cleaning assembly includes:
inputting the driving current data of the cleaning assembly into a pre-trained material classification model to construct current feature data of the driving current data of the cleaning assembly through the material classification model, and performing material prediction on the current feature data to obtain the current operating surface material corresponding to the current position of the automatic cleaning device.

The current feature data of the driving current data of the cleaning assembly is constructed by using the currently input driving current data of the cleaning assembly and a third number of the driving current data of the cleaning assembly input before the currently input driving current data of the cleaning assembly.

Optionally, after obtaining the current operating surface material corresponding to the current position of the automatic cleaning device, the method further includes:
displaying operating surface material identification information corresponding to the automatic cleaning device, where the operating surface material identification information includes operating surface materials identified by the automatic cleaning device at different positions;
correcting the operating surface material at a target position in response to an operating surface material correction instruction at any target position in the operating surface material identification information; and
acquiring a historical cleaning assembly current corresponding to the target position in the historical cleaning data of the automatic cleaning device, and updating and training the material classification model based on the historical cleaning assembly current and the corrected operating surface material.

Optionally, before determining the current operating surface material corresponding to the current position of the automatic cleaning device based on the operating data of the cleaning assembly, the method further includes:
detecting whether the automatic cleaning device enters a fabric material region; and
performing a step of determining the current operating surface material corresponding to the current position of the automatic cleaning device based on the operating data of the cleaning assembly upon detecting that the automatic cleaning device enters the fabric material region.

Optionally, the method further includes:
generating a fabric prediction region corresponding to the current position based on the current position of the automatic cleaning device and historical driving current data of the cleaning assembly corresponding to the current position upon detecting that the automatic cleaning device enters the fabric material region; and
planning a sweeping path for the automatic cleaning device in the fabric prediction region.

Optionally, detecting whether the automatic cleaning device enters the fabric material region includes:
acquiring visual data collected during the operation of the automatic cleaning device; and
performing fabric fiber data analysis on the visual data to determine whether the automatic cleaning device enters the fabric material region, where the fabric fiber data comprises a length and/or a density of the fabric fibers.

Optionally, the operating data of the cleaning assembly includes pressure data of the cleaning assembly; and determining the current operating surface material corresponding to the current position of the automatic cleaning device based on the operating data of the cleaning assembly includes:
in preset pressure ranges respectively corresponding to different operating surface materials, determining a preset pressure range within which the pressure data of the cleaning assembly falls as a hit pressure range, and determining the current operating surface material based on an operating surface material corresponding to the hit pressure range.

According to another aspect of the present disclosure, an obstacle avoidance control apparatus for an automatic cleaning device is provided. The apparatus includes:
a data collection assembly configured to acquire operating data of at least one cleaning assembly collected during operation of the automatic cleaning device;
a material identification assembly configured to determine a current operating surface material corresponding to a current position of the automatic cleaning device based on the operating data of the cleaning assembly; and
an obstacle avoidance control assembly configured to perform obstacle avoidance control on the automatic cleaning device according to an obstacle avoidance strategy corresponding to the current operating surface material.

Optionally, the operating data of the cleaning assembly includes the driving current data of the cleaning assembly; and the material identification assembly is further configured to:
in preset current ranges respectively corresponding to different operating surface materials, determine a preset current range within which the driving current data of the cleaning assembly falls as a hit current range, and determine the current operating surface material based on an operating surface material corresponding to the hit current range.

Optionally, the operating surface material includes: a first fabric material and a second fabric material, where a first height value of fabric fibers protruding from the operating surface in the first fabric material is greater than a second height value of fabric fibers protruding from the operating surface in the second fabric material.

Optionally, the obstacle avoidance strategy includes an obstacle avoidance reference parameter type, the obstacle avoidance reference parameter type of the first fabric material does not include a preset sensor data type, the obstacle avoidance reference data type of the second fabric material includes the preset sensor data type, and a sensing range of a preset sensor includes a range above the second height value.

Optionally, the material identification assembly is further configured to:
determine, by counting, a target range with a highest number of occurrences in a first number of consecutively identified hit current ranges; and
determine the current operating surface material based on an operating surface material corresponding to the target range.

Optionally, the material identification assembly is further configured to:
determine a currently identified material corresponding to the current position based on the operating surface material corresponding to the hit current range, and determine a historical operating surface material corresponding to the current position based on historical cleaning data of the automatic cleaning device;
determine the currently identified material as the current operating surface material if the historical operating surface material is consistent with the current operating surface material; and
acquire material identification strategy setting data of the automatic cleaning device if the historical operating surface material is inconsistent with the current operating surface material, and determine the current operating surface material according to the material identification strategy setting data, the currently identified material, and the historical operating surface material.

Optionally, the operating data of the cleaning assembly includes the driving current data of the cleaning assembly; and the material identification assembly is further configured to:
input the driving current data of the cleaning assembly into a pre-trained material classification model to construct current feature data of the driving current data of the cleaning assembly through the material classification model, and perform material prediction on the current feature data to obtain the current operating surface material corresponding to the current position of the automatic cleaning device.

The current feature data of the driving current data of the cleaning assembly is constructed by using the currently input driving current data of the cleaning assembly and a third number of the driving current data of the cleaning assembly input before the currently input driving current data of the cleaning assembly.

Optionally, the material identification assembly is further configured to:
display operating surface material identification information corresponding to the automatic cleaning device, where the operating surface material identification information includes operating surface materials identified by the automatic cleaning device at different positions;
correct the operating surface material at a target position in response to an operating surface material correction instruction at any target position in the operating surface material identification information; and
acquire a historical cleaning assembly current corresponding to the target position in the historical cleaning data of the automatic cleaning device, and update and train the material classification model based on the historical cleaning assembly current and the corrected operating surface material.

Optionally, the material identification assembly is further configured to:
detect whether the automatic cleaning device enters a fabric material region; and
perform a step of determining the current operating surface material corresponding to the current position of the automatic cleaning device based on the operating data of the cleaning assembly upon detecting that the automatic cleaning device enters the fabric material region.

Optionally, the apparatus further includes: a path planning assembly. The path planning assembly is configured to:
generate a fabric prediction region corresponding to the current position based on the current position of the automatic cleaning device and historical driving current data of the cleaning assembly corresponding to the current position upon detecting that the automatic cleaning device enters the fabric material region; and
plan a sweeping path for the automatic cleaning device in the fabric prediction region.

Optionally, the data collection assembly is further configured to acquire visual data collected during the operation of the automatic cleaning device; and
the material identification assembly is further configured to: acquire the visual data collected during the operation of the automatic cleaning device; and perform fabric fiber data analysis on the visual data to determine whether the automatic cleaning device enters the fabric material region, where the fabric fiber data includes a length and/or a density of the fabric fibers.

Optionally, the operating data of the cleaning assembly includes the pressure data of the cleaning assembly; and the material identification assembly is further configured to:
in preset pressure ranges respectively corresponding to different operating surface materials, determine a preset pressure range within which the pressure data of the cleaning assembly falls as a hit pressure range, and determine the current operating surface material based on an operating surface material corresponding to the hit pressure range.

According to yet another aspect of the present disclosure, a storage medium is provided. The storage medium stores a computer program. The computer program, when run by a processor, causes the processor to perform the above obstacle avoidance control method for an automatic cleaning device.

According to still another aspect of the present disclosure, a computer device is provided. The computer device includes a storage medium, a processor, and a computer program stored in the storage medium and executable by the processor. The processor, when running the computer program, is caused to perform the above obstacle avoidance control method for an automatic cleaning device.

By means of the above technical solutions, the present disclosure provides an obstacle avoidance control method and apparatus for an automatic cleaning device, a storage medium, and a device. Compared with the prior art in which an automatic cleaning device performs undifferentiated obstacle avoidance control when operating on operating surfaces made of different materials, the present disclosure adaptively sets corresponding obstacle avoidance strategies for different operating surface materials. As a result, during the operation of the automatic cleaning device, the operating data of the cleaning assembly is used to identify the current operating surface material corresponding to the automatic cleaning device, so as to perform the obstacle avoidance control according to the obstacle avoidance strategy adapted to the current operating surface material, thereby achieving adaptive selection of obstacle avoidance strategies for different operating surface materials, and reducing the occurrence of misidentification and missed identification of obstacles by the automatic cleaning device. This is beneficial for improving the cleaning efficiency and cleaning quality of the automatic cleaning device, and enhancing the user experience and product competitiveness.

The above description is only an overview of the technical solutions of the present disclosure. To more clearly understand the technical means of the present disclosure to enable implementation in accordance with the content of the specification and to make the above and other purposes, features, and advantages of the present disclosure more obvious and easy to understand, the detailed description of the present disclosure is provided below.

### BRIEF DESCRIPTION OF THE DRAWINGS

The drawings described herein are used to provide a further understanding of the present disclosure and constitute a part of the present disclosure. The exemplary embodiments of the present disclosure and the description thereof are used to explain the present disclosure and do not constitute an improper limitation on the present disclosure. In the drawings:
FIG. 1 shows a schematic flowchart of an obstacle avoidance control method for an automatic cleaning device according to one embodiment of the present disclosure;
FIG. 2 shows a schematic flowchart of another obstacle avoidance control method for an automatic cleaning device according to one embodiment of the present disclosure;
FIG. 3 shows a schematic flowchart of another obstacle avoidance control method for an automatic cleaning device according to one embodiment of the present disclosure;
FIG. 4 shows a schematic structural diagram of an obstacle avoidance control apparatus for an automatic cleaning device according to one embodiment of the present disclosure; and
FIG. 5 shows a schematic structural diagram of a computer device according to one embodiment of the present disclosure.

### DETAILED DESCRIPTION

The present disclosure will be described in detail below with reference to the drawings and in conjunction with the embodiments. It should be noted that the embodiments of the present disclosure and the features in the embodiments may be combined with each other without conflict.

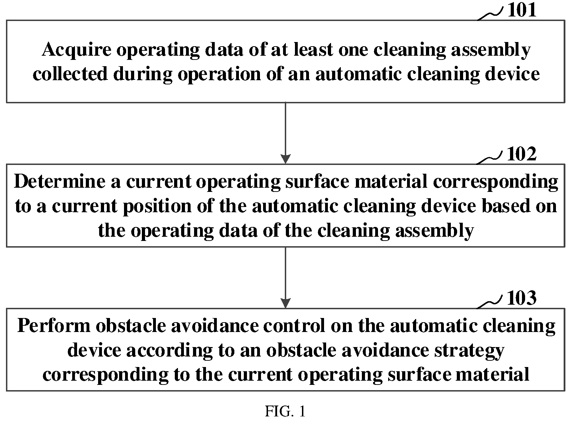

This embodiment provides an obstacle avoidance control method for an automatic cleaning device. As shown in FIG. 1, the method includes the following steps.

In step 101, operating data of at least one cleaning assembly collected during the operation of the automatic cleaning device is acquired.

The automatic cleaning device in one embodiment of the present disclosure may be a sweeping robot. During operation, the automatic cleaning device continuously collects operating data of the cleaning assembly through various sensors of the automatic cleaning device, so as to identify the material at the current position of the automatic cleaning device by using the collected operating data of the cleaning assembly, and select an obstacle avoidance strategy based on the material of the currently cleaned operating surface. As a result, the automatic cleaning device can automatically select an obstacle avoidance strategy suitable for the currently cleaned operating surface, thereby reducing the occurrence of omission or misjudgment of obstacles by the automatic cleaning device, and thus improving the cleaning efficiency and accuracy.

In step 102, a current operating surface material corresponding to a current position of the automatic cleaning device is determined based on the operating data of the cleaning assembly.

In this embodiment, the operating data of the cleaning assembly may include the driving current data of the cleaning assembly, the pressure data of the cleaning assembly, and the like. The cleaning assembly may specifically include a roller brush (a main brush), a side brush, and a mopping assembly. Specifically, one type of the operating data of the cleaning assembly may be selected to identify the operating surface material, or various types of the operating data of the cleaning assembly may be combined to identify the operating surface material. In the case where various types of the operating data of the cleaning assembly are combined to identify the material, when the material identification results corresponding to different types of the operating data of the cleaning assembly are consistent, the current operating surface material may be directly determined, and when the material identification results corresponding to different types of the operating data of the cleaning assembly are inconsistent, the different results may be scored to obtain the final material identification result. For example, different material identification results are scored based on a preset scoring weight, or the scoring weights for different types of the operating data of the cleaning assembly are determined based on user evaluations of historical operating surface material identification results. In a specific application scenario, a current detection sensor may be arranged on the main brush motor circuit, and the operating current of the main brush motor may be collected through the current detection sensor; for example, the sensor may be arranged at the reverse connection point of the main brush motor circuit. A pressure sensor may also be arranged on the brush bristles of the main brush, and the contact pressure of the main brush on the cleaned operating surface may be collected through the pressure sensor. In addition, visual data may also be collected through a camera or a laser sensor on the automatic cleaning device, so as to determine the operating surface material by using the computer vision technology.

In one embodiment of the present disclosure, the problem that the automatic cleaning device has difficulty in adapting to different types of fabrics for obstacle avoidance strategy settings is taken as an example. Optionally, in the case where the operating data of the cleaning assembly includes the driving current data of the cleaning assembly, step 102 includes: in preset current ranges respectively corresponding to different operating surface materials, determining a preset current range within which the driving current data of the cleaning assembly falls as a hit current range, and determining the current operating surface material based on an operating surface material corresponding to the hit current range. The operating surface material includes: a first fabric material and a second fabric material, where a first height value of the fabric fibers protruding from the operating surface in the first fabric material is greater than a second height value of the fabric fibers protruding from the operating surface in the second fabric material. The obstacle avoidance strategy includes an obstacle avoidance reference parameter type, the obstacle avoidance reference parameter type of the first fabric material does not include a preset sensor data type, the obstacle avoidance reference data type of the second fabric material includes the preset sensor data type, and the sensing range of a preset sensor includes a range above the second height value.

In this embodiment, taking the fabric as a carpet as an example, the driving current data of the cleaning assembly when the automatic cleaning device operates on different types of carpets is collected and analyzed in advance, and the preset current ranges of the main brush current corresponding to different types of carpets are defined, so as to distinguish the material type of the operating surface where the automatic cleaning device is located by using the preset current ranges corresponding to different types of carpets. Specifically, the carpets may be categorized into long-pile carpets and short-pile carpets according to the fiber length threshold values of the carpets. It should be noted that during the operation of the automatic cleaning device, the power of the main brush motor adaptively changes with the different friction forces between the main brush and the operating surface, so that the main brush can always maintain a certain rotation speed during the cleaning process of the automatic cleaning device. When the friction force between the main brush and the operating surface increases, the main brush motor drives the main brush to operate with stronger power. Therefore, the change in the current of the main brush can indirectly reflect the change in the friction force between the main brush and the operating surface, and different types of carpets and main brushes also generate different degrees of friction force. This feature is utilized in the embodiments of the present disclosure to determine the operating surface material by collecting the driving current data of the cleaning assembly. In a specific application scenario, the driving current data of the cleaning assembly collected when the automatic cleaning device operates on the long-pile carpet (the first fabric material) and the driving current data of the cleaning assembly collected when the automatic cleaning device operates on the short-pile carpet (the second fabric material) may be collected in advance, and the two are analyzed to establish a current range of the main brush current corresponding to each of the long-pile carpet and the short-pile carpet, i.e., the preset current range. During the operation of the automatic cleaning device, the driving current data of the cleaning assembly is collected in real time, and the preset current range within which the driving current data of the cleaning assembly falls is determined, thereby determining the carpet type of the operating surface currently cleaned by the automatic cleaning device. For example, if the driving current data of the cleaning assembly belongs to the preset current range corresponding to the long-pile carpet, it can be determined that the automatic cleaning device is currently cleaning the long-pile carpet.

Optionally, in the case where the operating data of the cleaning assembly includes the pressure data of the cleaning assembly, step 102 includes: in preset pressure ranges respectively corresponding to different operating surface materials, determining a preset pressure range within which the pressure data of the cleaning assembly falls as a hit pressure range, and determining the current operating surface material based on an operating surface material corresponding to the hit pressure range.

In this embodiment, similar to the above principle of detecting the operating surface material through the driving current data of the cleaning assembly, when the automatic cleaning device moves on different types of carpets, the contact pressure between the main brush and the carpet also varies. For example, the contact pressure on the short-pile carpet is greater than the contact pressure on the long-pile carpet. In a specific application scenario, the pressure data of the cleaning assembly collected when the automatic cleaning device operates on the long-pile carpet and the pressure data of the cleaning assembly collected when the automatic cleaning device operates on the short-pile carpet may also be collected in advance, and the two are analyzed to establish a pressure range of the main brush contact pressure corresponding to each of the long-pile carpet and the short-pile carpet, i.e., the preset pressure range. During the operation of the automatic cleaning device, the pressure data of the cleaning assembly is collected in real time, and the preset pressure range within which the pressure data of the cleaning assembly falls is determined, thereby determining the carpet type of the operating surface currently cleaned by the automatic cleaning device. For example, if the pressure data of the cleaning assembly belongs to the preset pressure range corresponding to the short-pile carpet, it can be determined that the automatic cleaning device is currently cleaning the short-pile carpet.

Optionally, in the case where the operating data of the cleaning assembly includes the visual data, step 102 further includes: analyzing, according to the visual data, fabric fiber data corresponding to the current position of the automatic cleaning device to determine the fabric type of the current operating surface, where the fabric fiber data includes the length and/or the density of the fabric fibers.

In this embodiment, visual data collection devices, such as the camera and the laser sensor, arranged on the automatic cleaning device may also be used to collect visual data when the automatic cleaning device operates on the long-pile carpet and visual data when the automatic cleaning device operates on the short-pile carpet, and analyze the lengths and densities of the fabric fibers of the long-pile carpet and the short-pile carpet to summarize the features of the lengths and the densities of the fabric fibers of the long-pile carpet and the short-pile carpet. During the operation of the automatic cleaning device, the visual data is collected in real time, and feature analysis is performed on the visual data to determine the carpet type of the operating surface currently cleaned by the automatic cleaning device.

In addition, in order to avoid the situation that other operating surface materials have a driving current data feature of the cleaning assembly, a pressure data feature of the cleaning assembly, and a visual data feature of the main brush that are similar to the carpet material, the material of the operating surface where the automatic cleaning device is located may be detected by using the existing material detection algorithm during the operation of the automatic cleaning device. In addition, the above method is performed upon detecting that the automatic cleaning device enters a fabric material region to distinguish between the long-pile carpet and the short-pile carpet, thereby improving the identification accuracy. Optionally, the method further includes: detecting whether the automatic cleaning device enters the fabric material region; and performing the above step 102 upon detecting that the automatic cleaning device enters the fabric material region.

In step 103, obstacle avoidance control is performed on the automatic cleaning device according to an obstacle avoidance strategy corresponding to the current operating surface material.

Finally, after the current operating surface material of the operating surface where the automatic cleaning device is located is identified, the obstacle avoidance strategy corresponding to the current operating surface material is found in preset obstacle avoidance strategies corresponding to different materials, thereby performing the obstacle avoidance control on the automatic cleaning device according to the obstacle avoidance strategy. In this way, adaptive selection of obstacle avoidance strategies for different operating surface materials can be achieved, and the occurrence of misidentification and missed identification of obstacles by the automatic cleaning device can be reduced. For example, if the sweeping robot detects that the current carpet is a long-pile carpet, a high-resistance state is determined. In this case, for a sensor whose sensing range includes a portion above the carpet fibers of a short-pile carpet, if obstacle avoidance is still performed by referring to the sensor data of this portion of the sensor (for example, a line laser sensor), it may easily lead to obstacle misidentification, resulting in missed sweeping. Therefore, this portion of the sensor is preset as a preset sensor, and data from this portion of the sensor is ignored and is not used as the basis for subsequent obstacle avoidance. If the sweeping robot detects that the current carpet is a short-pile carpet, a low-resistance state is determined, and the above sensor data is normally retained, so that a strategy enabling normal obstacle avoidance can also be achieved on the short-pile carpet.

By applying the technical solution of this embodiment, during the operation of the automatic cleaning device, the current operating surface material at the current position of the automatic cleaning device is identified by using the operating data of the cleaning assembly collected by the automatic cleaning device, thereby performing the obstacle avoidance control on the automatic cleaning device according to the obstacle avoidance strategy corresponding to the current operating surface material. Compared with the prior art in which an automatic cleaning device performs undifferentiated obstacle avoidance control when operating on operating surfaces made of different materials, the present disclosure adaptively sets corresponding obstacle avoidance strategies for different operating surface materials. As a result, during the operation of the automatic cleaning device, the operating data of the cleaning assembly is used to identify the current operating surface material corresponding to the automatic cleaning device, so as to perform the obstacle avoidance control according to the obstacle avoidance strategy adapted to the current operating surface material, thereby achieving adaptive selection of obstacle avoidance strategies for different operating surface materials, and reducing the occurrence of misidentification and missed identification of obstacles by the automatic cleaning device. This is beneficial for improving the cleaning efficiency and cleaning quality of the automatic cleaning device, and enhancing the user experience and product competitiveness.

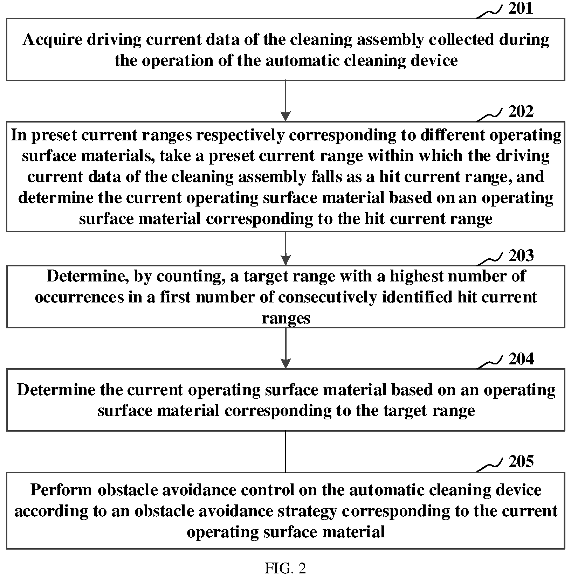

Further, as a refinement and extension of the detailed description of the above embodiment, in order to fully illustrate the specific implementation process of this embodiment, another obstacle avoidance control method for an automatic cleaning device is provided. As shown in FIG. 2, the method includes the following steps.

In step 201, driving current data of the cleaning assembly collected during the operation of the automatic cleaning device is acquired.

In step 202, in preset current ranges respectively corresponding to different operating surface materials, a preset current range within which the driving current data of the cleaning assembly falls is taken as a hit current range, and the current operating surface material is determined based on an operating surface material corresponding to the hit current range, where the operating surface material includes: a first fabric material and a second fabric material, and a first height value of fabric fibers protruding from the operating surface in the first fabric material is greater than a second height value of fabric fibers protruding from the operating surface in the second fabric material. The obstacle avoidance strategy includes an obstacle avoidance reference parameter type, the obstacle avoidance reference parameter type of the first fabric material does not include a preset sensor data type, the obstacle avoidance reference data type of the second fabric material includes the preset sensor data type, and the sensing range of a preset sensor includes a range above the second height value.

In one embodiment of the present disclosure, during operation, the automatic cleaning device may continuously collect the driving current data of the cleaning assembly through the current detection sensor arranged at the main brush motor circuit, and map the driving current data of the cleaning assembly collected each time to the preset current ranges corresponding to different operating surface materials, so as to determine the preset current range within which the driving current data of the cleaning assembly collected each time falls, that is, the hit current range within which the driving current data of the cleaning assembly falls.

The operating surface materials of the preset current ranges are preset to include at least a first fabric material (e.g., a long-pile carpet) and a second fabric material (e.g., a short-pile carpet). Since the fabric fiber of the long-pile carpet is relatively long, the obstacle detected by the line laser sensor may be the fabric fiber. If the automatic cleaning device avoids the fabric fiber for cleaning, it may result in missed sweeping. Therefore, the obstacle avoidance strategy for the long-pile carpet may be set to not use the data collected by the line laser sensor as the obstacle avoidance reference parameter. That is, the obstacle avoidance strategy for the long-pile carpet is to ignore the data collected by the line laser sensor and not use the data collected by the line laser sensor as the basis for subsequent obstacle avoidance, while the obstacle avoidance strategy for the short-pile carpet is to retain the data collected by the line laser sensor and use the data collected by the line laser sensor as the basis for subsequent obstacle avoidance.

In addition, more fabric types may also be set based on the fiber length of the fabric, such as long-pile, medium-long pile, medium-pile, medium-short pile, and short-pile categories. When corresponding obstacle avoidance strategies are set for different carpet types, the long-pile carpet may be set to completely ignore the line laser sensor data, the medium-long pile, medium-pile, and medium-short pile carpets are set to ignore line laser sensor data for partial heights, and the short-pile carpet is set to fully use the line laser sensor data. In the embodiments of the present disclosure, the carpets are only categorized into long-pile carpets and short-pile carpets as examples for description.

In step 203, a target range with the highest number of occurrences in a first number of consecutively identified hit current ranges is determined by counting.

In step 204, the current operating surface material is determined based on an operating surface material corresponding to the target range.

If the number of the target ranges is greater than or equal to a second number, the operating surface material corresponding to the target range is determined as the current operating surface material.

In this embodiment, since using the driving current data of the cleaning assembly detected in a single instance may lead to inaccurate identification of carpet types due to interference, jitter, or other reasons, the determination may be made by combining the driving current data of the cleaning assembly collected over several consecutive instances. Specifically, based on the current driving current data of the cleaning assembly and a plurality of the driving current data of the cleaning assembly collected previously, a first number of data is totaled, and the target range with the highest number of occurrences in the main brush current ranges corresponding to these driving current data of the cleaning assembly is determined by counting. The operating surface material corresponding to the target range is determined as the current operating surface material corresponding to the current position.

The operating surface material identified in real time may be further corrected in combination with the historical cleaning data. Optionally, after step 202, the method includes: determining a currently identified material corresponding to the current position based on the operating surface material corresponding to the hit current range, and determining a historical operating surface material corresponding to the current position based on historical cleaning data of the automatic cleaning device; determining the currently identified material as the current operating surface material if the historical operating surface material is consistent with the current operating surface material; and acquiring material identification strategy setting data of the automatic cleaning device if the historical operating surface material is inconsistent with the current operating surface material, and determining the current operating surface material according to the material identification strategy setting data, the currently identified material, and the historical operating surface material.

The operating surface material corresponding to the hit current range determined in real time may be used as the currently identified material, and then the historical operating surface material at the current position is determined based on the historical cleaning data. If the two are consistent, the currently identified material is confirmed to be accurate and is directly used as the current operating surface material for obstacle avoidance. If the two are inconsistent, the final current operating surface material is determined according to the material identification strategy set by the user or automatically matched in combination with the currently identified material and the historical operating surface material. For example, if the material identification strategy prioritizes the historical material, the historical operating surface material is used as the current operating surface material. In addition, whether the identified material is still inconsistent with the corresponding historical operating surface material is continuously monitored within a specific duration thereafter. If the inconsistency persists within the specific duration, the current operating surface material corresponding to the automatic cleaning device is determined as the material identified in real time.

Optionally, after step 203, the following solution may also be implemented: determining whether the number of occurrences of the target range reaches the second number, for example, in the driving current data of the cleaning assembly collected for 10 consecutive times, whether more than seven fall within the preset current range of the same material. If the number of occurrences reaches the second number, the operating surface material corresponding to the target range with the highest number of occurrences may be determined as the current operating surface material corresponding to the automatic cleaning device. If the number of the target ranges is less than the second number, the historical operating surface material corresponding to the current position is determined based on the historical cleaning data of the automatic cleaning device, and when the target range is consistent with the preset current range corresponding to the historical operating surface material, the operating surface material corresponding to the target range is determined as the current operating surface material.

In this embodiment, to reduce the inaccuracies in identification caused by insufficient stability of the main brush current due to external interference, the current operating surface material may be further determined in combination with the historical data. Specifically, if the number of occurrences of the target range with the highest number of occurrences in the above first number of main brush current ranges consecutively identified does not reach the second number, the material of the current position identified by the automatic cleaning device during the previous cleaning process may be further found in the historical cleaning record of the automatic cleaning device, that is, the historical operating surface material is determined, so as to determine whether the target range is consistent with the preset current range corresponding to the historical operating surface material. If the target range is consistent with the preset current range corresponding to the historical operating surface material, it may also be considered that the operating surface material corresponding to the target range is the current operating surface material. In this way, the determination of the carpet material by the automatic cleaning device enables an anti-jitter effect, improving the stability of the determination.

In step 205, obstacle avoidance control is performed on the automatic cleaning device according to an obstacle avoidance strategy corresponding to the current operating surface material.

In this embodiment, if it is determined that the current operating surface material is the long-pile carpet, the data collected by the line laser sensor is ignored in the subsequent obstacle avoidance control process, while if it is determined that the current operating surface material is the short-pile carpet, the obstacle avoidance control needs to be performed with reference to the data collected by the line laser sensor in the subsequent obstacle avoidance control process. In this way, by detecting the main brush current, the long-pile carpet and the short-pile carpet can be effectively distinguished, and a corresponding obstacle avoidance decision can be made, thereby improving the sweeping efficiency and adaptability of the sweeping robot.

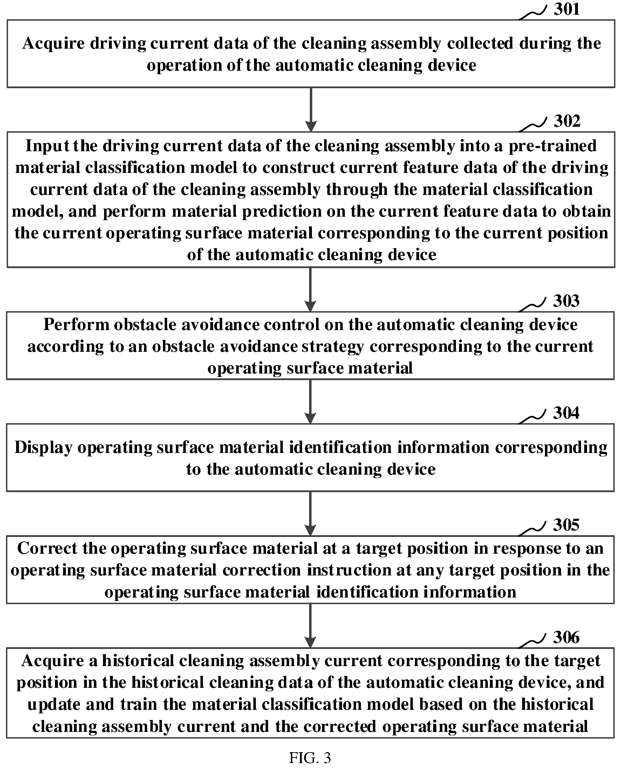

In one embodiment of the present disclosure, the material classification model may be pre-trained to predict the operating surface material, and during the operation of the automatic cleaning device, the model is continuously iterated and optimized to gradually improve the identification accuracy. As shown in FIG. 3, the method includes the following steps.

In step 301, driving current data of the cleaning assembly collected during the operation of the automatic cleaning device is acquired.

In step 302, the driving current data of the cleaning assembly is input into a pre-trained material classification model to construct current feature data of the driving current data of the cleaning assembly through the material classification model, and material prediction is performed on the current feature data to obtain the current operating surface material corresponding to the current position of the automatic cleaning device. The current feature data of the driving current data of the cleaning assembly is constructed by using the currently input driving current data of the cleaning assembly and a third number of the driving current data of the cleaning assembly input before the currently input driving current data of the cleaning assembly.

In step 303, obstacle avoidance control is performed on the automatic cleaning device according to an obstacle avoidance strategy corresponding to the current operating surface material.

In this embodiment, the material classification model is pre-trained based on driving current data samples of the cleaning assembly for different operating surface materials. Specifically, the driving current data samples of the cleaning assembly may be pre-collected driving current data of the cleaning assembly collected when the automatic cleaning device operates on the long-pile carpet and driving current data of the cleaning assembly collected when the automatic cleaning device operates on the short-pile carpet. Each driving current data sample of the cleaning assembly includes a third number of consecutively collected driving current data of the cleaning assembly and the corresponding long-pile carpet label or short-pile carpet label. During the operation of the automatic cleaning device, the driving current data of the cleaning assembly is collected in real time, and the driving current data of the cleaning assembly is input into the material classification model. The material classification model first constructs corresponding current feature data based on the currently input driving current data of the cleaning assembly and a third number of previously consecutively input driving current data of the cleaning assembly (or padding with zero vectors), and then predicts the current feature data to determine the current operating surface material, thereby performing the obstacle avoidance control on the automatic cleaning device according to the obstacle avoidance strategy of the current operating surface material.

In step 304, operating surface material identification information corresponding to the automatic cleaning device is displayed, where the operating surface material identification information includes operating surface materials identified by the automatic cleaning device at different positions.

In step 305, the operating surface material at a target position is corrected in response to an operating surface material correction instruction at any target position in the operating surface material identification information.

In step 306, a historical cleaning assembly current corresponding to the target position is acquired from the historical cleaning data of the automatic cleaning device, and the material classification model is updated and trained based on the historical cleaning assembly current and the corrected operating surface material.

In this embodiment, during or after the operation of the automatic cleaning device, the user may view, through the application associated with the automatic cleaning device, the material identification information of the operating surface identified by the automatic cleaning device, which may specifically be a cleaning region map. Each operating surface material region is marked on the map. After viewing the material identification information of the operating surface through the application, the user may correct the displayed material identification information of the operating surface, and may further construct a new sample according to the corrected operating surface material and the historical driving current data of the cleaning assembly at the corresponding position. The new sample is used to update and train the model, thereby improving the accuracy of the model.

It should be noted that the embodiments shown in FIGs. 2 and 3 may also be applied to the case where the pressure data of the cleaning assembly is used to achieve identification of the operating surface material of the automatic cleaning device and selection of the obstacle avoidance strategy. The specific solution is similar to the above solution implemented by using the driving current data of the cleaning assembly, which is not repeated herein.

In one embodiment of the present disclosure, optionally, the method further includes: generating a fabric prediction region corresponding to the current position based on the current position of the automatic cleaning device and historical driving current data of the cleaning assembly corresponding to the current position upon detecting that the automatic cleaning device enters the fabric material region; and planning a sweeping path for the automatic cleaning device in the fabric prediction region.

In this embodiment, when the automatic cleaning device is detected entering the fabric material region, the historical cleaning data of the automatic cleaning device may be retrieved, and the historical driving current data of the cleaning assembly matching the current position of the automatic cleaning device is found in the historical cleaning data. For example, a material map or a current map may be constructed in advance by using the driving current data of the cleaning assembly collected by the automatic cleaning device during the historical cleaning process, where the material map is a map constructed by the automatic cleaning device based on the material of each identified region during the previous cleaning process, and the current map is a map constructed by the automatic cleaning device based on the driving current data of the cleaning assembly collected at different positions during the previous cleaning process. Therefore, when the automatic cleaning device is detected entering the fabric material region, the carpet region entered by the automatic cleaning device is acquired from the material map based on the current position of the automatic cleaning device; or the historical driving current data of the cleaning assembly, which is within a certain range from the current position and has a difference value within a certain range from the currently collected driving current data of the cleaning assembly, is acquired based on the current position of the automatic cleaning device, and the carpet region is drawn by using this portion of the historical driving current data of the cleaning assembly. Finally, the carpet region determined based on the current position and the historical driving current data of the cleaning assembly corresponding to the current position is used as the above fabric prediction region. During subsequent planning of the sweeping path for the automatic cleaning device, the fabric prediction region is used as a reference to enable more precise sweeping path planning. In this way, the automatic cleaning device preferentially completes sweeping in the fabric prediction region before entering other material regions, thereby avoiding the need to frequently adjust obstacle avoidance strategies for repeatedly entering and exiting the carpet region, improving the sweeping efficiency and sweeping quality of the sweeping robot, and enhancing the user experience.

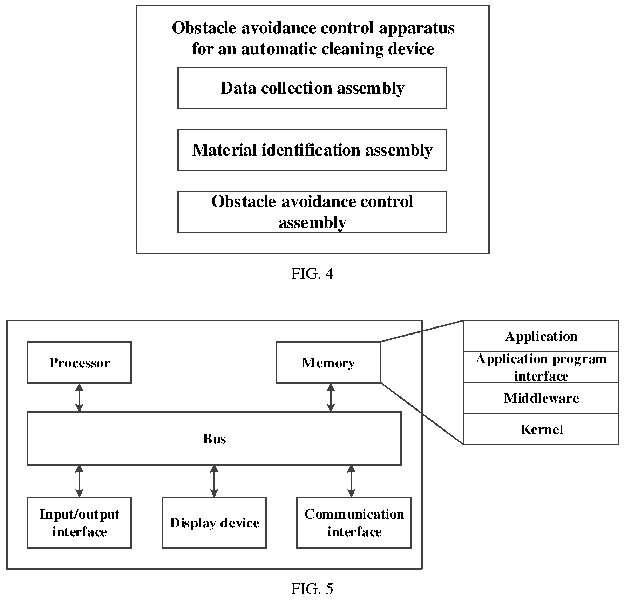

Further, as a specific implementation of the method in FIG. 1, one embodiment of the present disclosure provides an obstacle avoidance control apparatus for an automatic cleaning device. As shown in FIG. 4, the apparatus includes:
a data collection assembly configured to acquire operating data of at least one cleaning assembly collected during operation of the automatic cleaning device;
a material identification assembly configured to determine a current operating surface material corresponding to a current position of the automatic cleaning device based on the operating data of the cleaning assembly; and
an obstacle avoidance control assembly configured to perform obstacle avoidance control on the automatic cleaning device according to an obstacle avoidance strategy corresponding to the current operating surface material.

Optionally, the operating data of the cleaning assembly includes the driving current data of the cleaning assembly; and the material identification assembly is further configured to:
in preset current ranges respectively corresponding to different operating surface materials, determine a preset current range within which the driving current data of the cleaning assembly falls as a hit current range, and determine the current operating surface material based on an operating surface material corresponding to the hit current range.

Optionally, the operating surface material includes: a first fabric material and a second fabric material, where a first height value of fabric fibers protruding from the operating surface in the first fabric material is greater than a second height value of fabric fibers protruding from the operating surface in the second fabric material.

Optionally, the obstacle avoidance strategy includes an obstacle avoidance reference parameter type, the obstacle avoidance reference parameter type of the first fabric material does not include a preset sensor data type, the obstacle avoidance reference data type of the second fabric material includes the preset sensor data type, and a sensing range of a preset sensor includes a range above the second height value.

Optionally, the material identification assembly is further configured to:
determine, by counting, a target range with the highest number of occurrences in a first number of consecutively identified hit current ranges; and
determine the current operating surface material based on an operating surface material corresponding to the target range.

Optionally, the material identification assembly is further configured to:
determine a currently identified material corresponding to the current position based on the operating surface material corresponding to the hit current range, and determine a historical operating surface material corresponding to the current position based on historical cleaning data of the automatic cleaning device;
determine the currently identified material as the current operating surface material if the historical operating surface material is consistent with the current operating surface material; and
acquire material identification strategy setting data of the automatic cleaning device if the historical operating surface material is inconsistent with the current operating surface material, and determine the current operating surface material according to the material identification strategy setting data, the currently identified material, and the historical operating surface material.

Optionally, the material identification assembly is further configured to:
determine the operating surface material corresponding to the target range as the current operating surface material if the number of the target ranges is greater than or equal to the second number; and determine the historical operating surface material corresponding to the current position based on the historical cleaning data of the automatic cleaning device if the number of the target ranges is less than the second number, and determine the operating surface material corresponding to the target range as the current operating surface material when the target range is consistent with the preset current range corresponding to the historical operating surface material.

Optionally, the operating data of the cleaning assembly includes the driving current data of the cleaning assembly; and the material identification assembly is further configured to:
input the driving current data of the cleaning assembly into a pre-trained material classification model to construct current feature data of the driving current data of the cleaning assembly through the material classification model, and perform material prediction on the current feature data to obtain the current operating surface material corresponding to the current position of the automatic cleaning device.

The current feature data of the driving current data of the cleaning assembly is constructed by using the currently input driving current data of the cleaning assembly and a third number of the driving current data of the cleaning assembly input before the currently input driving current data of the cleaning assembly.

Optionally, the material identification assembly is further configured to:
display operating surface material identification information corresponding to the automatic cleaning device, where the operating surface material identification information includes operating surface materials identified by the automatic cleaning device at different positions;
correct the operating surface material at a target position in response to an operating surface material correction instruction at any target position in the operating surface material identification information; and
acquire a historical cleaning assembly current corresponding to the target position in the historical cleaning data of the automatic cleaning device, and update and train the material classification model based on the historical cleaning assembly current and the corrected operating surface material.

Optionally, the material identification assembly is further configured to:
detect whether the automatic cleaning device enters a fabric material region; and
perform the step of determining the current operating surface material corresponding to the current position of the automatic cleaning device based on the operating data of the cleaning assembly upon detecting that the automatic cleaning device enters the fabric material region.

Optionally, the apparatus further includes: a path planning assembly. The path planning assembly is configured to:
generate a fabric prediction region corresponding to the current position based on the current position of the automatic cleaning device and historical driving current data of the cleaning assembly corresponding to the current position upon detecting that the automatic cleaning device enters the fabric material region; and
plan a sweeping path for the automatic cleaning device in the fabric prediction region.

Optionally, the data collection assembly is further configured to acquire visual data collected during the operation of the automatic cleaning device; and
the material identification assembly is further configured to: acquire the visual data collected during the operation of the automatic cleaning device; and perform fabric fiber data analysis on the visual data to determine whether the automatic cleaning device enters the fabric material region, where the fabric fiber data includes the length and/or the density of the fabric fibers.

Optionally, the operating data of the cleaning assembly includes the pressure data of the cleaning assembly; and the material identification assembly is further configured to:
in preset pressure ranges respectively corresponding to different operating surface materials, determine a preset pressure range within which the pressure data of the cleaning assembly falls as a hit pressure range, and determine the current operating surface material based on an operating surface material corresponding to the hit pressure range.

It should be noted that for other corresponding descriptions of various functional units related to the obstacle avoidance control apparatus for the automatic cleaning device according to the embodiments of the present disclosure, reference may be made to the corresponding description in FIGs. 1 to 3. Details are not described herein again.

One embodiment of the present disclosure further provides a computer device, which may be specifically a personal computer, a server, a network device, or the like. As shown in FIG. 5, the computer device includes a bus, a processor, a memory, and a communication interface, and may also include an input/output interface and a display device. The processor of the computer device is configured to provide computing and control capabilities. The memory of the computer device includes a non-volatile storage medium and an internal memory. The non-volatile storage medium stores an operating system, a computer program, and a database. The internal memory provides an environment for the operation of the operating system and the computer program in the non-volatile storage medium. The database of the computer device is configured to store position information. The network interface of the computer device is configured to communicate with an external terminal through a network connection. The computer program, when run by the processor, causes the processor to perform the steps in the method embodiments.

Those skilled in the art can understand that the structure shown in FIG. 5 is merely a block diagram of a part of the structure related to the solutions of the present disclosure, and does not constitute a limitation on the computer device to which the solutions of the present disclosure are applied. Specifically, the computer device may include more or fewer components than those shown in the figure, or combine some components, or have different component arrangements.

In one embodiment, a computer-readable storage medium is provided. The computer-readable storage medium may be non-volatile or volatile, and have a computer program stored thereon. The computer program, when run by a processor, causes the processor to perform the steps in the above method embodiments.

In one embodiment, a computer program product is provided. The computer program product includes a computer program. The computer program, when run by a processor, causes the processor to perform the steps in the above method embodiments.

It should be noted that the user information (including but not limited to user device information, user personal information, etc.) and data (including but not limited to data for analysis, stored data, displayed data, etc.) involved in the present disclosure are information and data authorized by users or fully authorized by all parties.

Those of ordinary skill in the art can understand that all or part of the processes of the methods in the above embodiments may be implemented by a computer program instructing related hardware. The computer program may be stored in a non-volatile computer-readable storage medium, and when the computer program is run, the processes of the above method embodiments may be included. Any reference to a memory, a database, or another medium used in the embodiments according to the present disclosure may include at least one of a non-volatile memory and a volatile memory. The non-volatile memory may include a read-only memory (read-only memory, ROM), a magnetic tape, a floppy disk, a flash memory, an optical memory, a high-density embedded non-volatile memory, a resistive random access memory (ReRAM), a magnetoresistive random access memory (magnetoresistive random access memory, MRAM), a ferroelectric random access memory (ferroelectric random access memory, FRAM), a phase change memory (phase change memory, PCM), a graphene memory, and the like. The volatile memory may include a random access memory (random access memory, RAM), an external cache memory, and the like. By way of illustration rather than limitation, RAM may be in various forms, such as a static random access memory (static random access memory, SRAM) or a dynamic random access memory (dynamic random access memory, DRAM). The database involved in the embodiments according to the present disclosure may include at least one of a relational database and a non-relational database. The non-relational database may include a blockchain-based distributed database, or the like, but it is not limited thereto. The processor involved in the embodiments according to the present disclosure may be a general-purpose processor, a central processing unit, a graphics processing unit, a digital signal processor, a programmable logic device, a quantum computing-based data processing logic device, or the like, but it is not limited thereto.

The technical features of the above embodiments can be combined arbitrarily. For brevity, not all possible combinations of the technical features in the above embodiments are described. However, as long as there is no contradiction in the combinations of these technical features, the combinations should all be considered to fall within the scope of the specification.

The above embodiments merely represent several implementations of the present disclosure, and the description thereof is relatively specific and detailed, but should not be construed as limiting the patent scope of the present disclosure. It should be noted that those of ordinary skill in the art may make several variations and improvements without departing from the concept of the present disclosure, and such variations and improvements shall all fall within the protection scope of the present disclosure. Therefore, the protection scope of the present disclosure shall be subject to the appended claims.

## Claims

1. An obstacle avoidance control method for an automatic cleaning device, comprising:
acquiring operating data of at least one cleaning assembly collected during operation of the automatic cleaning device;
determining a current operating surface material corresponding to a current position of the automatic cleaning device based on the operating data of the cleaning assembly; and
performing obstacle avoidance control on the automatic cleaning device according to an obstacle avoidance strategy corresponding to the current operating surface material.

2. The method according to claim 1, wherein the operating data of the cleaning assembly comprises driving current data of the cleaning assembly; and
determining the current operating surface material corresponding to the current position of the automatic cleaning device based on the operating data of the cleaning assembly comprises:
in preset current ranges respectively corresponding to different operating surface materials, taking a preset current range within which the driving current data of the cleaning assembly falls as a hit current range, and determining the current operating surface material based on an operating surface material corresponding to the hit current range.

3. The method according to claim 1, wherein
the operating surface material comprises: a first fabric material and a second fabric material, wherein a first height value of fabric fibers protruding from the operating surface in the first fabric material is greater than a second height value of fabric fibers protruding from the operating surface in the second fabric material.

4. The method according to claim 3, wherein
the obstacle avoidance strategy comprises an obstacle avoidance reference parameter type, the obstacle avoidance reference parameter type corresponding to the first fabric material does not comprise a preset sensor data type, the obstacle avoidance reference data type corresponding to the second fabric material comprises the preset sensor data type, and a sensing range of a preset sensor comprises a range above the second height value.

5. The method according to claim 2, wherein determining the current operating surface material based on the operating surface material corresponding to the hit current range comprises:
determining, by counting, a target range with a highest number of occurrences in a first number of consecutively identified hit current ranges; and
determining the current operating surface material based on an operating surface material corresponding to the target range.

6. The method according to claim 2, wherein determining the current operating surface material based on the operating surface material corresponding to the hit current range comprises:
determining a currently identified material corresponding to the current position based on the operating surface material corresponding to the hit current range, and determining a historical operating surface material corresponding to the current position based on historical cleaning data of the automatic cleaning device;
determining the currently identified material as the current operating surface material if the historical operating surface material is consistent with the current operating surface material; and
acquiring material identification strategy setting data of the automatic cleaning device if the historical operating surface material is inconsistent with the current operating surface material, and determining the current operating surface material according to the material identification strategy setting data, the currently identified material, and the historical operating surface material.

7. The method according to claim 1, wherein the operating data of the cleaning assembly comprises pressure data of the cleaning assembly; and determining the current operating surface material corresponding to the current position of the automatic cleaning device based on the operating data of the cleaning assembly comprises:
in preset pressure ranges respectively corresponding to different operating surface materials, determining a preset pressure range within which the pressure data of the cleaning assembly falls as a hit pressure range, and determining the current operating surface material based on an operating surface material corresponding to the hit pressure range.

8. The method according to any one of claims 1 to 7, wherein the cleaning assembly comprises a roller brush.

9. The method according to any one of claims 1 to 7, wherein before determining the current operating surface material corresponding to the current position of the automatic cleaning device based on the operating data of the cleaning assembly, the method further comprises:
detecting whether the automatic cleaning device enters a fabric material region; and
performing a step of determining the current operating surface material corresponding to the current position of the automatic cleaning device based on the operating data of the cleaning assembly upon detecting that the automatic cleaning device enters the fabric material region.

10. The method according to claim 9, wherein the method further comprises:
generating a fabric prediction region corresponding to the current position based on the current position of the automatic cleaning device and historical driving current data of the cleaning assembly corresponding to the current position upon detecting that the automatic cleaning device enters the fabric material region; and
planning a sweeping path for the automatic cleaning device in the fabric prediction region.

11. The method according to claim 9, wherein detecting whether the automatic cleaning device enters the fabric material region comprises:
acquiring visual data collected during the operation of the automatic cleaning device; and
performing fabric fiber data analysis on the visual data to determine whether the automatic cleaning device enters the fabric material region, wherein the fabric fiber data comprises a length and/or a density of the fabric fibers.

12. An obstacle avoidance control apparatus for an automatic cleaning device, comprising:
a data collection assembly, configured to acquire operating data of at least one cleaning assembly collected during operation of the automatic cleaning device;
a material identification assembly, configured to determine a current operating surface material corresponding to a current position of the automatic cleaning device based on the operating data of the cleaning assembly; and
an obstacle avoidance control assembly, configured to perform obstacle avoidance control on the automatic cleaning device according to an obstacle avoidance strategy corresponding to the current operating surface material.

13. A storage medium having a computer program stored therein, wherein the computer program, when run by a processor, causes the processor to perform the method according to any one of claims 1 to 11.

14. A computer device, comprising a storage medium, a processor, and a computer program stored in the storage medium and executable by the processor, wherein the processor, when running the computer program, is caused to perform the method according to any one of claims 1 to 11.
